# EUROPEAN PATENT APPLICATION

(11) **EP 4 706 948 A1**
(43) Date of publication of application: **11.03.2026**
(21) Application number: 25189532.2
(22) Date of filing: 15.07.2025
(51) Int. Cl.: B29C 73/16

(54) **PUNCTURE REPAIR KIT**

(30) Priority: 06.09.2024 JP 2024154164
(71) Applicant: SUMITOMO RUBBER INDUSTRIES, LTD., Kobe-shi, Hyogo 651-0072 (JP)
(72) Inventor: MAKI, TAKASHI, Hyogo, 651-0072 (JP); NOMURA, KEISUKE, Hyogo, 651-0072 (JP)
(74) Representative: Forresters IP LLP

(57) **Abstract**

A puncture repair kit (1) for repairing a puncture on an object includes a container (2) containing a puncture repair fluid (R), a compressed air source (3) for supplying compressed air, and a mixing device (4) configured to be attached to the container to produce a mixture of the puncture repair fluid and the compressed air. The mixing device includes a mixing chamber (5) for producing the mixture, a first inlet flow path (6) configured to be connected to the compressed air source, a second inlet flow path (7) for supplying the puncture repair fluid from the container to the mixing chamber, and an outlet flow path (8) for discharging the mixture from the mixing chamber. The first inlet flow path includes a first opening (6a) for supplying the compressed air to the container, and a second opening (6b) for supplying the compressed air to at least one of the mixing chamber and the second inlet flow path.

## Description

### RELATED APPLICATIONS

This application claims the benefit of foreign priority to Japanese Patent Applications No. JP2024-154164, filed September 6, 2024, which is incorporated by reference in its entirety.

### FIELD OF THE INVENTION

The present invention relates to a puncture repair kit for repairing a puncture in an object.

### BACKGROUND OF THE INVENITON

Conventionally, puncture repair kits are known for repairing objects such as flat tires. For example, Japanese Unexamined Patent Application Publication No. 2023-066212 (Patent Literature 1) proposes a puncture repair kit that reduces compressed air supply time by diverting the compressed air supplied from a compressor to flow, thereby preventing a puncture repair fluid from coagulating in a supply path.

### SUMMARY OF THE INVENTION

However, the puncture repair kit of Patent Literature 1 may sometimes cause partial coagulation of the puncture repair fluid due to the fact that the compressed air and the puncture repair fluid may sometimes be discharged without being mixed evenly, and there has been a demand for further improvement in terms of efficiency of puncture repair.

The present invention was made in view of the above, and a primary object thereof is to provide a puncture repair kit capable of efficiently repairing a puncture in an object.

The present invention is a puncture repair kit for repairing a puncture on an object including:
a container containing a puncture repair fluid;
a compressed air source for supplying compressed air; and
a mixing device configured to be attached to the container to produce a mixture of the puncture repair fluid and the compressed air,
wherein the mixing device includes:
   a mixing chamber for producing the mixture;
   a first inlet flow path configured to be connected to the compressed air source;
   a second inlet flow path for supplying the puncture repair fluid from the container to the mixing chamber; and
   an outlet flow path for discharging the mixture from the mixing chamber,
   wherein the first inlet flow path includes:
      a first opening for supplying the compressed air to the container; and
      a second opening for supplying the compressed air to at least one of the mixing chamber and the second inlet flow path.

It is possible that the puncture repair kit of the present invention, having the above-mentioned configuration, efficiently repair a puncture in an object.

### BRIEF DESCRIPTION OF THE DRAWINGS

FIG. 1 is a cross-sectional view schematically showing a puncture repair kit according to an embodiment of the present invention.
FIG. 2 is a cross-sectional view schematically showing the puncture repair kit according to another embodiment.
FIG. 3 is a plan view of a mixing chamber of FIG. 1.
FIG. 4 is a perspective view schematically showing a first inlet flow path of FIG. 1.
FIG. 5 is a perspective view showing the first inlet flow path according to the second embodiment.
FIG. 6 is a perspective view showing the first inlet flow path according to the third embodiment.

### DETAILED DESCRIPTION OF THE INVENTION

An embodiment of the present invention will now be described in conjunction with accompanying drawings.

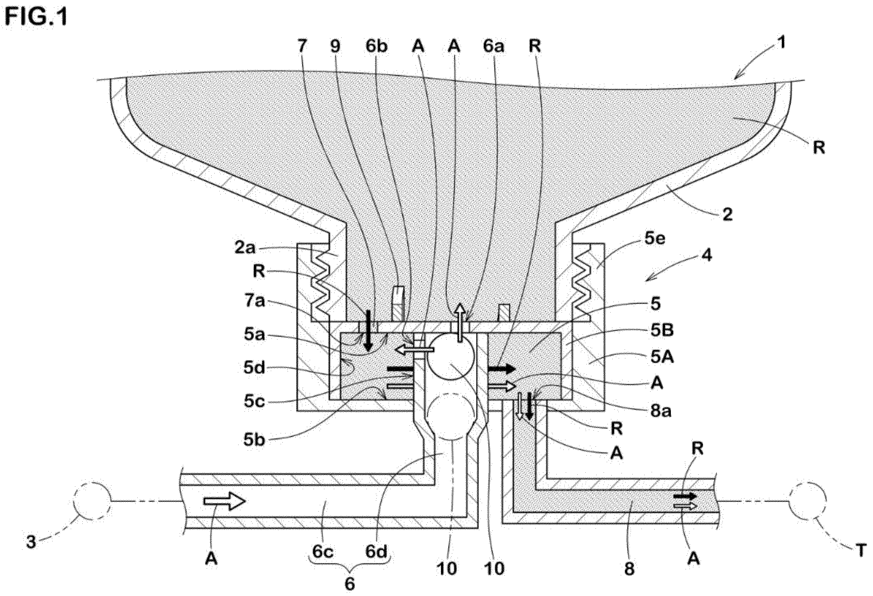

FIG. 1 is a cross-sectional view showing a schematic diagram of a puncture repair kit 1 according to the present embodiment. As shown in FIG. 1, the puncture repair kit 1 is suitably used for injecting a puncture repair fluid (R) and compressed air (A) into an object (T), such as a punctured tire, for example.

The puncture repair kit 1 in the present embodiment includes a container 2 containing the puncture repair fluid (R) and a compressed air source 3 for supplying the compressed air (A). The container 2 has a mouth portion (2a) for housing the puncture repair fluid (R) inside the container 2, for example. It is preferred that the container 2 contains the puncture repair fluid (R) through the mouth portion (2a) thereof. The mouth portion (2a) in the present embodiment has a film (not shown) for keeping the contained puncture repair fluid (R) airtight. The container 2 configured as such is suitable for long-term storage of the puncture repair fluid (R).

The compressed air source 3 is a compressor, for example. The compressed air source 3 generates the compressed air (A) by receiving electricity via a cord (not shown) connected to an external power source, for example. The compressed air source 3 configured as such can supply a large amount of the compressed air (A) in a small size and is easy to store when not in use.

The puncture repair kit 1 of the present embodiment includes a mixing device 4 configured to be attached to the container 2 to produce a mixture of the puncture repair fluid (R) and the compressed air (A). The mixing device 4 of the present embodiment includes a mixing chamber 5 for producing a mixture of the puncture repair fluid (R) and the compressed air (A). The mixing chamber 5 is a space surrounded by a ceiling (or top) surface (5a) located upward, in a positional state during puncture repair, a floor (or bottom) surface (5b) located downward, and an inner surface (5c) and an outer surface (5d) each connecting the ceiling surface (5a) and the floor surface (5b). It is possible that the mixing device 4 configured as such uniformly mixes the puncture repair fluid (R) and the compressed air (A) in a large space.

The mixing device 4 of the present embodiment includes a first inlet flow path 6 configured to be connected to the compressed air source 3 and a second inlet flow path 7 for supplying the puncture repair fluid (R) from the container 2 to the mixing chamber 5. The first inlet flow path 6 in the present embodiment includes a first opening (6a) for supplying the compressed air (A) toward the container 2.

The mixing device 4 configured as such increases the internal pressure in the container 2 by supplying compressed air (A) to the container 2, and this internal pressure enables the puncture repair fluid (R) to be smoothly discharged from the second inlet flow path 7 even when the viscosity of the puncture repair fluid (R) is relatively high. Further, since the mixing device 4 configured as such has a high feed rate of the puncture repair fluid (R), the puncture repair fluid (R) and the compressed air (A) can be mixed uniformly in the mixing chamber 5 without aerosolization. Here, a non-aerosolized mixture means a mixture in which the particle size of the puncture repair fluid (R) is greater than 500 µm.

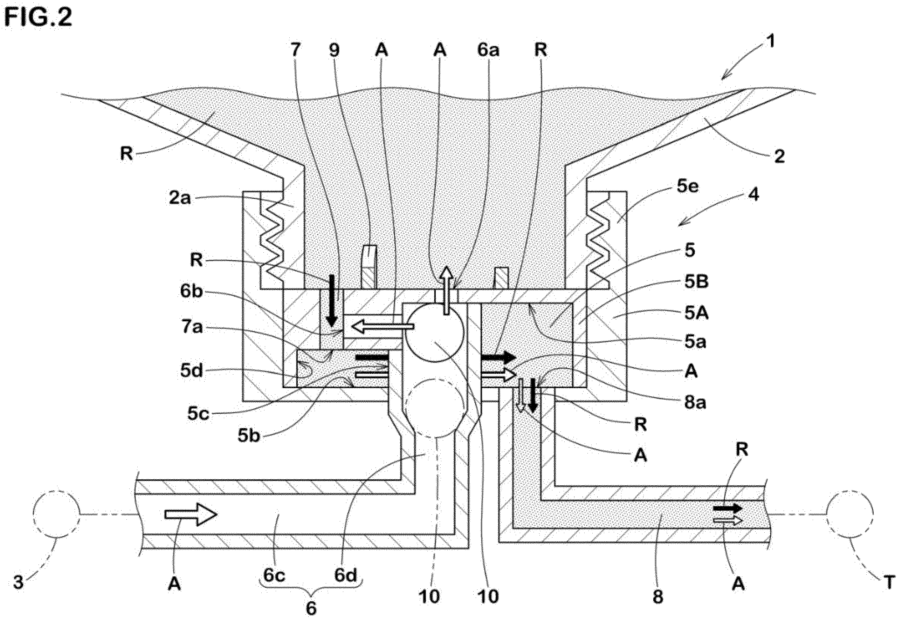

FIG. 2 is a cross-sectional view that shows a schematic diagram of the puncture repair kit 1 according to another embodiment. As shown in FIGs. 1 and 2, the first inlet flow path 6 in these embodiments includes a second opening (6b) for supplying the compressed air (A) toward at least one of the mixing chamber 5 and the second inlet flow path 7. FIG. 1 illustrates the second opening (6b) for supplying the compressed air (A) to the mixing chamber 5. FIG. 2 illustrates the second opening (6b) for supplying the compressed air (A) to the second inlet flow path 7. The mixing device 4 configured as such can supply the compressed air (A) to at least one of the mixing chamber 5 and the second inlet flow path 7 without impeding the flow of the puncture repair fluid (R) in the second inlet flow path 7, and thus can efficiently mix the puncture repair fluid (R) and compressed air (A).

The mixing device 4 of these embodiments includes an outlet flow path 8 for discharging the mixture of the puncture repair fluid (R) and the compressed air (A) from the mixing chamber 5. It is possible that the mixing device 4 configured as such efficiently discharges the mixture of the puncture repair fluid (R) and the compressed air (A). Therefore, it is possible that the puncture repair kit 1 according to these embodiments efficiently repairs a puncture in the object (T).

In a more preferred embodiment, the puncture repair fluid (R) has a viscosity of 100 mPa-s or less at 25 degrees Celsius. The puncture repair fluid (R) configured as such is smoothly supplied from the second inlet flow path 7 to the mixing chamber 5 and can be efficiently mixed with the compressed air (A) when used in a room temperature environment.

In the present specification, the viscosity of the puncture repair fluid (R) is a value measured by using a B-type viscometer with a spindle LV-4 and a rotation speed of 10 rpm in accordance with the provisions of Japanese Industrial Standards JIS K7117-1:1999.

The puncture repair fluid (R) preferably has a viscosity of 400 mPa-s or lower at -30 degrees Celsius. When used in a low temperature environment, the puncture repair fluid (R) configured as such is supplied to the mixing chamber 5 through the second inlet flow path 7 by the compressed air (A) supplied from the first opening (6a), and mixed with the compressed air (A), and then it is possible that the mixer is discharged into the punctured object (T).

It is preferred that the puncture repair fluid (R) contains at least glycol. Examples of glycols include ethylene glycol, 1,3-propanediol, and propylene glycol, for example. The puncture repair fluid (R) configured as such is suitable for efficiently repairing a puncture when a small amount of the mixture is injected into the punctured object (T).

The mixing chamber 5 is formed by combining a first member 5A and a second member 5B, for example. The first member 5A is connected to the outlet flow path 8 and has the first inlet flow path 6 passing therethrough, for example. The second member 5B is connected to the first inlet flow path 6, and has the first opening (6a) and the second inlet flow path 7 formed therein, for example. The mixing chamber 5 configured as such can simplify the manufacturing process, which helps to reduce manufacturing costs. It should be noted that the mixing chamber 5 is not limited to such a configuration, and may be integrally molded, for example.

It is preferred that the first member 5A is formed in a cylindrical shape with a bottom. The first member 5A in the present embodiment constitutes the floor surface (5b) of the mixing chamber 5. The mixing chamber 5 configured as such can ensure a stable space with a simple configuration, which is helpful for reduction of manufacturing costs.

The first member 5A has an attachment portion (5e) configured to be attached to the mouth portion (2a) of the container 2, for example. The attachment portion (5e) of the present embodiment is screwed to the mouth portion (2a) for use during puncture repair. The mixing device 4 configured as such can be easily attached to the container 2, and can be prevented from coming off the container 2 even when the pressure of the compressed air (A) is applied.

It is preferred that the second member 5B is formed as a cylindrical shape with a bottom. The second member 5B is located inside the first member 5A, for example. As a result, the second member 5B in the present embodiment forms the ceiling surface (5a) and the outer surface (5d) of the mixing chamber 5. The mixing chamber 5 configured as such can ensure a stable space with a simple configuration, which helps reduce manufacturing costs.

The first member 5A and the second member 5B are integrally joined together by a lock mechanism (not shown), for example. The mixing chamber 5 configured as such can improve stability during use without the first member 5A and the second member 5B being disintegrated by the pressure of the compressed air (A). It should be noted that the method of joining the first member 5A and the second member 5B is not limited to this type of coupling, and they may be joined by screws or press-fitting, for example.

It is preferred that an outer diameter of the second member 5B is larger than an inner diameter of the mouth portion (2a) of the container 2.The second member 5B configured as such can be positioned by contacting the mouth portion (2a), and therefore there is no risk of the second member 5B coming off the first member 5A when the pressure of the compressed air (A) is applied.

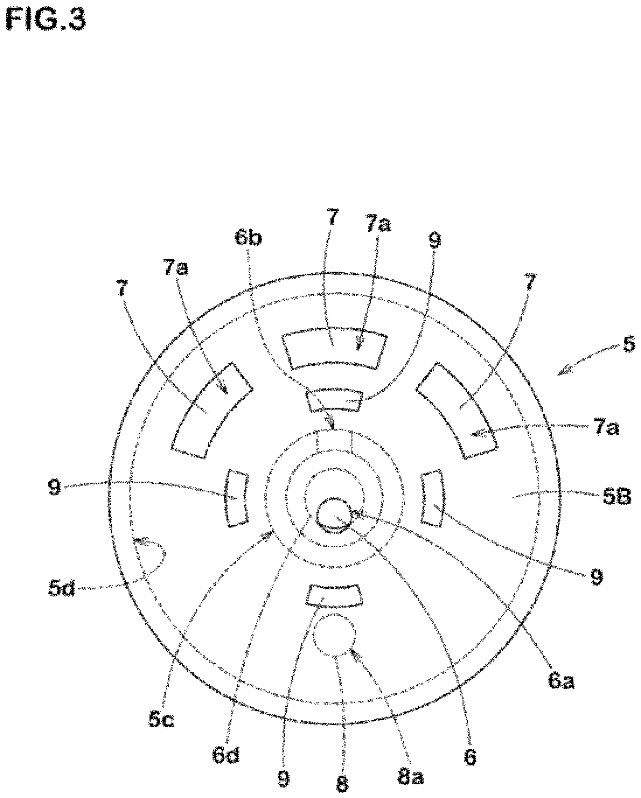

FIG. 3 is a plan view of the mixing chamber 5 of FIG. 1. As shown in FIG. 1 to FIG. 3, the second member 5B has at least one breaking portion 9, four breaking portions 9 in the present embodiment, for breaking a film (not shown) provided on the mouth portion (2a) of the container 2. The breaking portion 9 is or the breaking portions 9 are provided in the ceiling surface (5a) on a side opposite to the mixing chamber 5. It is preferred that the breaking portion 9 is or the breaking portions 9 are disposed between the first opening (6a) and the second inlet flow path 7. The breaking portion 9 in the present embodiment is provided around the first opening (6a). By attaching the mixing device 4 configured as such to the container 2, the film of the container 2 can be broken to supply the puncture repair fluid (R) to the mixing chamber 5, thereby, it is possible that the puncture repair fluid (R)is smoothly mixed with the compressed air (A) in the mixing chamber 5.

It is preferred that the first inlet flow path 6 includes a horizontal portion (6c) extending horizontally and a vertical portion (6d) extending vertically when in use during puncture repair. Here, the horizontal portion (6c) extending horizontally is a portion that distributes the compressed air (A) parallel to a support surface, such as the ground, that supports the puncture repair kit 1 in use. Further, the vertical portion (6d) extending vertically is a portion that distributes the compressed air (A) in a direction perpendicular to the horizontal portion (6c).

The vertical portion (6d) has a ball valve 10 for preventing the puncture repair fluid (R) from flowing back into the compressed air source 3, for example. FIG. 1 shows the ball valve 10 with compressed air (A) being supplied to it. It should be noted that the ball valve 10 when the supply of the compressed air (A) is stopped is shown by a two-dot chain line in FIG. 1. It is possible that the first inlet flow path 6 configured as such prevents the puncture repair fluid (R) from flowing back into the compressed air source 3, even if the puncture repair fluid (R) remains inside the container 2 when the supply of the compressed air (A) from the compressed air source 3 is stopped, and therefore, it is possible that damage to the compressed air source 3 is prevented.

It is preferred that the mixing chamber 5 is formed around the vertical portion (6d) of the first inlet flow path 6. The mixing chamber 5 is formed around the ball valve 10, for example. The vertical portion (6d) of the first inlet flow path 6 in the present embodiment constitutes the inner surface (5c) of the mixing chamber 5. The mixing chamber 5 configured as such can ensure a large space, therefore, it is possible that the puncture repair fluid (R) and the compressed air (A) are mixed efficiently and uniformly. Further, since the mixing chamber 5 of the present embodiment is composed of the first member 5A and the second member 5B, the ball valve 10 can be easily assembled.

The second inlet flow path 7 extends along the vertical portion (6d) of the first inlet flow path 6, for example. It is possible that the second inlet flow path 7 configured as such smoothly supplies the puncture repair fluid (R) to the mixing chamber 5 by using the compressed air (A) supplied from the vertical portion (6d) and gravity.

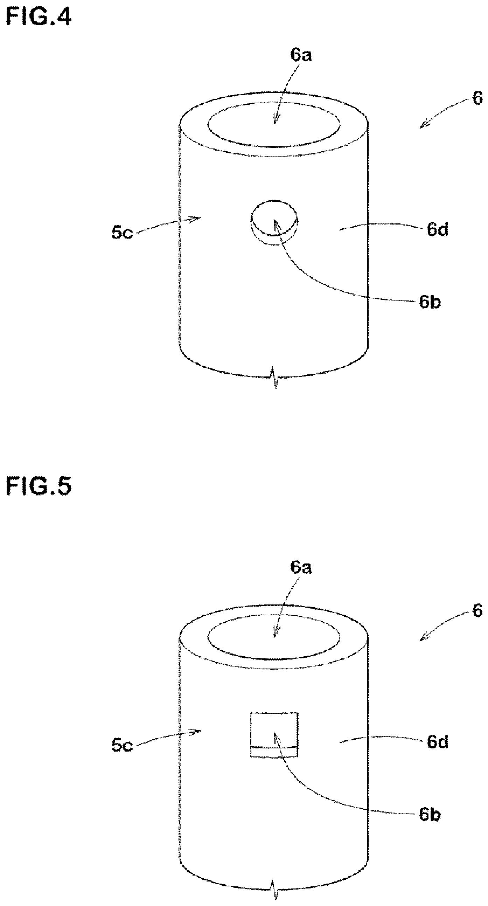

FIG. 4 is a perspective view schematically showing the first inlet flow path 6 of FIG. 1. As shown in FIGs. 1 to 4, the first opening (6a) of the present embodiment is formed at an upper end of the vertical portion (6d) in use. It is possible that the first opening (6a) configured as such efficiently supplies the compressed air (A) into the inside of the container 2.

The first opening (6a) includes at least one, one in the present embodiment, circular opening. The first opening (6a) configured as such is easy to process and helps to efficiently supply the compressed air (A) into the inside of the container 2. The first opening (6a) is not limited to such a form, and may include a plurality of openings, or may include a slit-shaped opening or a polygonal opening, for example.

It is preferred that an opening area S1 of the first opening (6a) is 1 sq. mm or more. Since the opening area S1 of the first opening (6a) 1 sq. mm or more, a sufficient amount of the compressed air (A) supplied to the container 2 can be ensured, therefore, the puncture repair fluid (R) can be reliably supplied even in a low-temperature environment. From such a point of view, the opening area S1 of the first opening (6a) is more preferably 5 sq. mm or more, and further preferably 15 sq. mm or more.

In the present specification, the opening area S1 of the first opening (6a) is the area at the upper end surface of the second member 5B, and when the first opening (6a) includes a plurality of openings, the opening area S1 is calculated as the total area of these openings.

It is preferred that the opening area S1 of the first opening (6a) is 700 sq. mm or less. Since the opening area S1 of the first opening (6a) is 700 sq. mm or less, the flow rate of the compressed air (A) supplied to the container 2 can be kept above a certain level, and thereby, it is possible that the compressed air (A) is supplied to the back of the container 2 even in a low-temperature environment. From such a point of view the opening area S1 of the first opening (6a) is more preferably 200 sq. mm or less, and further preferably 40 sq. mm or less.

In view of these, the opening area S1 of the first opening (6a) is preferably from 1 to 700 sq. mm, more preferably from 5 to 200 sq. mm, and further preferably from 15 to 40 sq. mm. It should be noted that the combination of the upper and lower limits of these numerical ranges can be selected arbitrarily.

In the present embodiment, the second opening (6b) is formed on a side surface of the vertical portion (6d). It is possible that the second opening (6b) configured as such efficiently supplies the compressed air (A) to at least one of the mixing chamber 5 formed around the vertical portion (6d) and the second inlet flow path 7 extending along the vertical portion (6d).

The second opening (6b) includes at least one, one in the present embodiment, circular opening. The second opening (6b) configured as such is easy to process and serves to efficiently supply the compressed air (A) to at least one of the mixing chamber 5 and the second inlet flow path 7. The second opening (6b) is not limited to such a mode, and may include a plurality of openings, for example.

It is preferred that an opening area S2 of the second opening (6b) is 0.1 sq. mm or more. Since the opening area S2 of the second opening (6b) 0.1 sq. mm or more, the compressed air (A) can be reliably supplied directly to at least one of the mixing chamber 5 and the second inlet flow path 7, which helps to ensure uniform mixing in the mixing chamber 5. From such a point of view, the opening area S2 of the second opening (6b) is preferably 1 sq. mm or more, and more preferably 2 sq. mm or more.

In the present specification, the opening area S2 of the second opening (6b) is an area of an outer peripheral surface or an end surface on the second inlet flow path 7 side of the vertical portion (6d), and when the second opening (6b) includes a plurality of openings, the opening area S2 is calculated as the sum of these areas.

It is preferred that the opening area S2 of the second opening (6b) is 700 sq. mm or less. Since the opening area S2 of the second opening (6b) is 700 sq. mm or less, a sufficient amount of the compressed air (A) supplied to the container 2 can be secured, therefore, the puncture repair fluid (R) can be reliably supplied even in a low-temperature environment. From such a point of view, the opening area S2 of the second opening (6b) is more preferably 200 sq. mm or less, and further preferably 11 sq. mm or less.

In view of these, the opening area S2 of the second opening (6b) is preferably from 0.1 to 700 sq. mm, more preferably from 1 to 200 sq. mm, and further preferably from 2 to 11 sq. mm. It should be noted that the combination of the upper and lower limits of these numerical ranges can be selected arbitrarily.

It is preferred that the opening area S2 of the second opening (6b) is 1% or more of the opening area S1 of the first opening (6a). Since the opening area S2 of the second opening (6b) is 1% or more of the opening area S1 of the first opening (6a), the compressed air (A) can be reliably supplied directly to at least one of the mixing chamber 5 and the second inlet flow path 7, which contributes to uniform mixing in the mixing chamber 5. From such a point of view, the opening area S2 of the second opening (6b) is more preferably 5% or more, and even more preferably 10% or more of the opening area S1 of the first opening (6a).

It is preferred that the opening area S2 of the second opening (6b) is 500% or less of the opening area S1 of the first opening (6a). Since the opening area S2 of the second opening (6b) is 500% or less of the opening area S1 of the first opening (6a), a sufficient amount of the compressed air (A) supplied to the container 2 can be ensured, therefore, it is possible that the puncture repair fluid (R) is reliably supplied even in a low-temperature environment. From such a point of view, the opening area S2 of the second opening (6b) is more preferably 200% or less, and even more preferably 50% or less of the opening area S1 of the first opening (6a).

For these reasons, the opening area S2 of the second opening (6b) is preferably from 1% to 500%, more preferably from 5% to 200%, and even more preferably from 10% to 50% of the opening area S1 of the first opening (6a). It should be noted that the combination of the upper and lower limits of these numerical ranges can be selected arbitrarily.

FIG. 5 is a perspective view showing the first inlet flow path 6 according to the second embodiment. As shown in FIG. 5, the second opening (6b) of the first inlet flow path 6 may include a polygonal shaped opening, for example. The second opening (6b) of the second embodiment includes a rectangular opening. The second opening (6b) configured as such can have a shape that corresponds to the shape and size of the mixing chamber 5, which is useful for uniform mixing in the mixing chamber 5.

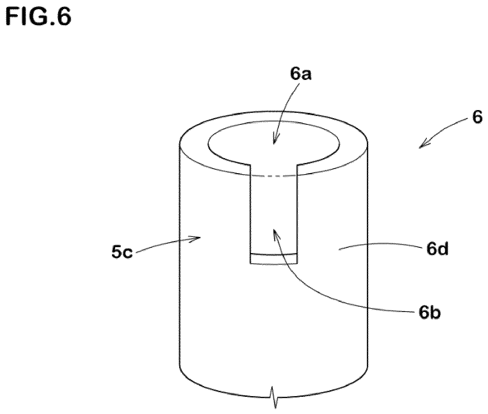

FIG. 6 is a perspective view showing the first inlet flow path 6 according to the third embodiment. As shown in FIG. 6, the second opening (6b) of the first inlet flow path 6 may communicate with the first opening (6a), for example. In this case, the opening area of the opening is determined based on the position of the opening with an imaginary outer edge indicated by a two-dot chain line in FIG. 6 as the boundary. The second opening (6b) configured as such is suitable for supplying a large amount of the compressed air (A) to the mixing chamber 5, which helps to achieve uniform mixing in the mixing chamber 5. It should be noted that the first inlet flow path 6 of the third embodiment may be combined with the second member 5B of FIG. 2 to form the second opening (6b) of FIG. 2, for example.

As shown in FIGs. 1 to 3, the second inlet flow path 7 in the present embodiment includes a second inlet opening (7a) that opens into the mixing chamber 5. The second inlet opening (7a) includes at least one slit-shaped opening, three slit-shaped openings in the present embodiment. The second inlet opening (7a) configured as such regulates the puncture repair fluid (R) supplied to the mixing chamber 5, thereby promoting uniform mixing in the mixing chamber 5 and ensuring that the puncture repair fluid (R) can be reliably supplied even in a low-temperature environment. The second inlet opening (7a) is not limited to such a mode, and may be a circular opening or a rectangular opening, or may be a single elongated opening, for example.

It is preferred that the second inlet opening (7a) and the second opening (6b) are formed on the same side of the vertical portion (6d) in a plan view. The mixing device 4 configured as such promotes uniform mixing in the mixing chamber 5 and can prevent the puncture repair fluid (R) from partially coagulating inside the outlet flow path 8.

The outlet flow path 8 in the present embodiment includes an outlet opening (8a) that opens into the mixing chamber 5. It is preferred that the outlet opening (8a) and the second opening (6b) are formed on opposite sides with the vertical portion (6d) between them in a plan view. The outlet opening (8a) configured as such promotes uniform mixing in the mixing chamber 5 and helps prevent the puncture repair fluid (R) from partially coagulating inside the outlet flow path 8.

While detailed description has been made of especially preferred embodiments of the present invention, the present invention can be embodied in various forms without being limited to the illustrated embodiments.

### [Statement of Invention]

The present invention includes the following aspects.

### [Present Invention 1]

A puncture repair kit for repairing a puncture on an object including:
a container containing a puncture repair fluid;
a compressed air source for supplying compressed air; and
a mixing device configured to be attached to the container to produce a mixture of the puncture repair fluid and the compressed air,
wherein the mixing device includes:
   a mixing chamber for producing the mixture;
   a first inlet flow path configured to be connected to the compressed air source;
   a second inlet flow path for supplying the puncture repair fluid from the container to the mixing chamber; and
   an outlet flow path for discharging the mixture from the mixing chamber,
   wherein the first inlet flow path includes:
      a first opening for supplying the compressed air to the container; and
      a second opening for supplying the compressed air to at least one of the mixing chamber and the second inlet flow path.

### [Present Invention 2]

The puncture repair kit according to Present Invention 1, wherein
the first inlet flow path includes a horizontal portion extending horizontally and a vertical portion extending vertically during puncture repair, and
the first opening is formed at an upper end of the vertical portion.

### [Present Invention 3]

The puncture repair kit according to Present Invention 2, wherein the second opening is formed on a side surface of the vertical portion.

### [Present Invention 4]

The puncture repair kit according to Present Invention 2 or 3, wherein the mixing chamber is formed around the vertical portion.

### [Present Invention 5]

The puncture repair kit according to any one of Present Inventions 2 to 4, wherein the second inlet flow path extends along the vertical portion.

### [Present Invention 6]

The puncture repair kit according to any one of Present Inventions 2 to 5, wherein
the outlet flow path includes an outlet opening that opens into the mixing chamber, and
the outlet opening and the second opening are formed on opposite sides across the vertical portion in a plan view.

### [Present Invention 7]

The puncture repair kit according to any one of Present Inventions 2 to 6, wherein
the second inlet flow path includes a second inlet opening that opens into the mixing chamber, and
the second inlet opening and the second opening are formed on a same side with respect to the vertical portion in a plan view.

### [Present Invention 8]

The puncture repair kit according to Present Invention 7, wherein the second inlet opening includes at least one slit-shaped opening.

### [Present Invention 9]

The puncture repair kit according to any one of Present Inventions 2 to 8, wherein the vertical portion has a ball valve for preventing the puncture repair fluid from flowing back into the compressed air source.

### [Present Invention 10]

The puncture repair kit according to any one of Present Inventions 1 to 9, wherein an opening area of the second opening is in a range from 5% to 200% of an opening area of the first opening.

### [Present Invention 11]

The puncture repair kit according to any one of Present Inventions 1 to 10, wherein the puncture repair fluid has a viscosity of 100 mPa-s or less at 25 degrees Celsius and a viscosity of 400 mPa-s or less at -30 degrees Celsius.

### [Present Invention 12]

The puncture repair kit according to any one of Present Inventions 2 to 9, wherein the mixing chamber is a space surrounded by, in a positional state during puncture repair, a ceiling surface located upward a floor surface located downward, and an inner surface and an outer surface each connecting the ceiling surface and the floor surface.

### [Present Invention 13]

The puncture repair kit according to Present Invention 12, wherein the vertical portion forms the inner surface.

### [Present Invention 14]

The puncture repair kit according to Present Invention 12 or 13, wherein
the mixing chamber is formed by combining a first member and a second member,
the first member forms the floor surface, and
the second member is arranged inside the first member and forms the outer surface.

### [Present Invention 15]

The puncture repair kit according to Present Invention 14, wherein
the first member has the first inlet flow path passing therethrough, and
the first member is connected to the outlet flow path.

### [Present Invention 16]

The puncture repair kit according to Present Invention 15, wherein
the second member is connected to the first inlet flow path, and
the first opening and the second inlet flow path are formed in the second member.

### [Present Invention 17]

The puncture repair kit according to Present Invention 13, wherein
the container has a mouth portion for housing the puncture repair fluid inside the container, and
the second member has an outer diameter larger than an inner diameter of the mouth portion.

### [Present Invention 18]

The puncture repair kit according to Present Invention 17, wherein
the second member has at least one breaking portion for breaking a film provided on the mouth portion of the container, and
the at least one breaking portion is disposed between the first opening and the second inlet flow path in a plan view.

### [Present Invention 19]

The puncture repair kit according to Present Invention 10, wherein
the opening area of the first opening is in a range from 5 to 200 mm².

### [Present Invention 20]

The puncture repair kit according to Present Invention 10, wherein
the opening area of the second opening is in a range from 1 to 200 mm².

### [Present Invention 21]

The puncture repair kit according to any one of Present Inventions 2 to 9, wherein the mixing chamber is a space surrounded by a top surface located upwardly during puncture repair, a bottom surface located downwardly, and inner and outer surfaces connecting the top surface and the bottom surface.

### [Present Invention 22]

The puncture repair kit according to Present Invention 21, wherein the vertical portion constitutes the inner surface.

### [Present Invention 23]

The puncture repair kit according to Present Invention 21 or 22, wherein
the mixing chamber is formed by combining a bottomed cylindrical first member and a bottomed cylindrical second member,
wherein the first member constitutes the bottom surface, and
the second member is disposed inside the first member and constitutes the top surface and the outer surface.

### [Present Invention 24]

The puncture repair kit according to Present Invention 23, wherein
the first member is connected to the outlet flow path and is penetrated by the vertical portion.

### [Description of Reference Signs]

1 puncture repair kit, 2 container, 3 compressed air source, 4 mixing device, 5, mixing chamber, 6 first inlet flow path, 6a first opening, 6b second opening, 7 second inlet flow path, 8 outlet flow path

## Claims

1. A puncture repair kit for repairing a puncture on an object comprising:
a container containing a puncture repair fluid;
a compressed air source for supplying compressed air; and
a mixing device configured to be attached to the container to produce a mixture of the puncture repair fluid and the compressed air,
wherein the mixing device comprises:
a mixing chamber for producing the mixture;
a first inlet flow path configured to be connected to the compressed air source;
a second inlet flow path for supplying the puncture repair fluid from the container to the mixing chamber; and
an outlet flow path for discharging the mixture from the mixing chamber,
wherein the first inlet flow path comprises:
a first opening for supplying the compressed air to the container; and
a second opening for supplying the compressed air to at least one of the mixing chamber and the second inlet flow path.

2. The puncture repair kit according to claim 1, wherein
the first inlet flow path includes a horizontal portion extending horizontally and a vertical portion extending vertically during puncture repair, and
the first opening is formed at an upper end of the vertical portion.

3. The puncture repair kit according to claim 2, wherein the second opening is formed on a side surface of the vertical portion.

4. The puncture repair kit according to claim 2 or 3, wherein the mixing chamber is formed around the vertical portion.

5. The puncture repair kit according to any one of claims 2 to 4, wherein the second inlet flow path extends along the vertical portion.

6. The puncture repair kit according to any one of claims 2 to 5, wherein
the outlet flow path includes an outlet opening that opens into the mixing chamber, and
the outlet opening and the second opening are formed on opposite sides across the vertical portion in a plan view.

7. The puncture repair kit according to any one of claims 2 to 6, wherein
the second inlet flow path includes a second inlet opening that opens into the mixing chamber, and
the second inlet opening and the second opening are formed on a same side with respect to the vertical portion in a plan view.

8. The puncture repair kit according to claim 7, wherein the second inlet opening includes at least one slit-shaped opening.

9. The puncture repair kit according to any one of claims 2 to 8, wherein the vertical portion has a ball valve for preventing the puncture repair fluid from flowing back into the compressed air source.

10. The puncture repair kit according to any one of claims 1 to 9, wherein an opening area of the second opening is in a range from 5% to 200% of an opening area of the first opening.

11. The puncture repair kit according to any one of claims 1 to 10, wherein the puncture repair fluid has a viscosity of 100 mPa-s or less at 25 degrees Celsius and a viscosity of 400 mPa-s or less at -30 degrees Celsius.

12. The puncture repair kit according to any one of claims 2 to 9, wherein the mixing chamber is a space surrounded by, in a positional state during puncture repair, a ceiling surface located upward a floor surface located downward, and an inner surface and an outer surface each connecting the ceiling surface and the floor surface.

13. The puncture repair kit according to claim 12, wherein the vertical portion forms the inner surface.

14. The puncture repair kit according to claim 12 or 13, wherein
the mixing chamber is formed by combining a first member and a second member,
the first member forms the floor surface, and
the second member is arranged inside the first member and forms the outer surface.

15. The puncture repair kit according to claim 14, wherein
the first member has the first inlet flow path passing therethrough, and
the first member is connected to the outlet flow path.
